# EUROPÄISCHE PATENTSCHRIFT

(11) **EP 1 349 381 B1**
(45) Veröffentlichungstag und Bekanntmachung des Hinweises auf die Patenterteilung: **08.10.2008**
(21) Anmeldenummer: 03005772.3
(22) Anmeldetag: 14.03.2003
(51) Int. Cl.: H04N 5/235

(54) **Verfahren und Vorrichtung zur Regelung eines Bildsensors**
Device and method for controlling an image sensor
Dispositif et procédé de regulation d'un capteur d'image

(30) Priorität: 28.03.2002 DE 10213917
(43) Veröffentlichungstag der Anmeldung: 01.10.2003
(73) Patentinhaber: ROBERT BOSCH GMBH, 70442 Stuttgart (DE)
(72) Erfinder: Franz, Matthias, 72074 Tuebingen (DE); Seger, Ulrich, 71106 Magstadt (DE)

(56) Entgegenhaltungen:
- EP-A- 0 996 284
- US-A1- 2002 012 053
- US-A1- 2002 012 064

## Beschreibung

### Stand der Technik

Die Erfindung betrifft ein Verfahren und eine Vorrichtung zur Regelung eines Bildsensors.

Die Aufgabe der Regelung eines Bildsensors, wie z.B. einer Kamera, ist es, die aufgenommene Szene in ein Bild mit möglichst hohem Kontrast umzusetzen. Im Allgemeinen erfolgt dies mittels einer Regelung des Bildsensors, welche wenigstens einen Regelparameter, beispielsweise die elektrische Verstärkung (Gain), den Offset und/oder die Integrationszeit, an die momentan gemessenen Belichtungsverhältnisse der aufgenommenen bzw. aufzunehmenden Szene anpaßt. Dabei gehen herkömmliche Regelungen von der Annahme aus, dass sich die Szene von Bild zu Bild nicht wesentlich verändert. Die für die momentan sichtbare Szene berechneten Größen werden daher als für die nächsten Bilder gültig bleibend angenommen. Diese Annahme verliert jedoch in einigen Anwendungen ihre Gültigkeit, in denen schnell veränderliche Szenen auftreten, wie z.B. bei einer Fahrzeugkamera bei höherer Geschwindigkeit. Bei einer herkömmlichen Regelung tritt ein Hinterherhinken der richtigen Zielgrößen auf, so dass der Bildsensor die wechselnden Lichtverhältnisse nicht mehr richtig wiedergeben kann. Ferner sind Belichtungsmessungen im Allgemeinen verrauscht, so dass das Messsignal geglättet werden muss. Dies verstärkt das Hinterherhinken zusätzlich. Ferner bestehen Probleme bei punktuellen Störungsereignissen, wie beispielsweise ein vor der Kamera vorbeilaufender Scheibenwischer. Es besteht daher Bedarf an einer Regelung eines Bildsensors, welche auch bei schnell veränderlichen Szenen eine zufriedenstellende Umsetzung der aufgenommenen Szene in ein Bild erlaubt.

Aus der US 2002/0012064 A1 ist eine Kamera mit einer Linse, einem Bildsensor und einer Lichtmengeneinstellvorrichtung bekannt, wobei die Lichtmengeneinstellvorrichtung zwischen Linse und Bildsensor angeordnet ist. Die EP 0 996 284 A1 offenbart ein Verfahren zur Regelung der Belichtungszeit eines Lichtsensors.

### Vorteile der Erfindung

Durch eine prädiktive Regelung eines Bildsensors werden die äußerst vielgestaltigen Anforderungen bei schnell veränderlichen Szenen, beispielsweise bei Aufnahme eines Kraftfahrzeugumfelds, sicher erfüllt. Insbesondere ist vorteilhaft, dass sich die Schnelligkeit der Regelung an die Dynamik der veränderlichen Lichtverhältnisse anpaßt.

In vorteilhafter Weise wird die zwischen den Zeitpunkten der Belichtungsmessung und dem Wirksamwerden von neu berechneten Regelgrößen bestehende, nicht vermeidbare Totzeit durch eine Extrapolation der Regelgrößen in die Zukunft wesentlich kompensiert. So ist die Regelung in der Lage, schnellen Belichtungsveränderungen zu folgen. Gleichzeitig erlaubt es die Regelung, punktuell auftretende, starke Beleuchtungsänderungen sowie grobe Unter- oder Überbelichtungen als Ausreißer zu detektieren. Diese können die Regelung nicht destabilisieren. Somit ist der Bildsensor auch in Anwendungen einsetzbar, bei denen schnell wechselnde Szene und Belichtungsverhältnisse auftreten.

In besonders vorteilhafter Weise wird ein dynamisches Model für die Belichtungsverhältnisse verwendet, welches aus momentanen und aus vergangenen Belichtungsmessungen die zukünftigen Beleuchtungsverhältnisse extrapoliert. Auf diese Weise ist es möglich, die Dynamik der Regelung an die Umwelt anzupassen, d.h. die Regelparameter den momentanen Belichtungsveränderungen entsprechend festzulegen, ohne dass die Regelung instabil wird.

In besonders vorteilhafter Weise wird ein Modell eingesetzt, welches sowohl eine Gewichtung der Belichtungsmessungen nach ihrem Rauschanteil ermöglicht. Dabei kann das Modell auch die Rauscheigenschaften des Belichtungssignals berücksichtigen. Diese beiden Maßnahmen verhindern eine Destabilisierung der Regelung bei schnelleren Belichtungsveränderungen.

Ferner bestehen in bestimmten Anwendungsgebieten kurzzeitig auftretende Belichtungsänderungen, für die eine Anpassung der Kameraregelung nicht erwünscht ist. Diese werden im Folgenden Ausreisser genannt. Der Einsatz des Modells erlaubt aufgrund einer starken Abweichung zwischen vorhergesagtem und gemessenem Belichtungswert eine Detektion dieser Ausreisser. Eine solche Belichtungsmessung kann bei der Berechnung der zukünftigen Regelparameter verworfen werden, so dass eine Destabilisierung der Regelung verhindert werden kann.

Von besonderem Vorteil ist, dass diese Ausreißer nachfolgenden Verarbeitungsmodulen mitgeteilt werden.

Durch diese Maßnahme wird ein Kamerasystem in vorteilhafter Weise an den Einsatz im Kraftfahrzeug, insbesondere zur Umfeldsensierung eines Kraftfahrzeugs, vorbereitet. Dieses zeigt die angegebenen Vorteile aber auch in anderen Anwendungen, bei denen eine Anpassung an schnell wechselnde Belichtungsverhältnisse gewünscht wird.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt ein Übersichtsblockschaltbild einer KameraRegelung mit Anpassung der Regelparameter, während in Figur 2 anhand eines Ablaufdiagramms eine bevorzugte Realisierung der Vorgehensweise zur Anpassung der Regelparameter dargestellt ist. In den Figuren 3 und 4 ist die Wirkungsweise der prädiktiven Regelung anhand von Zeitdiagrammen in zwei typischen Situationen dargestellt.

### Beschreibung von Ausführungsbeispielen

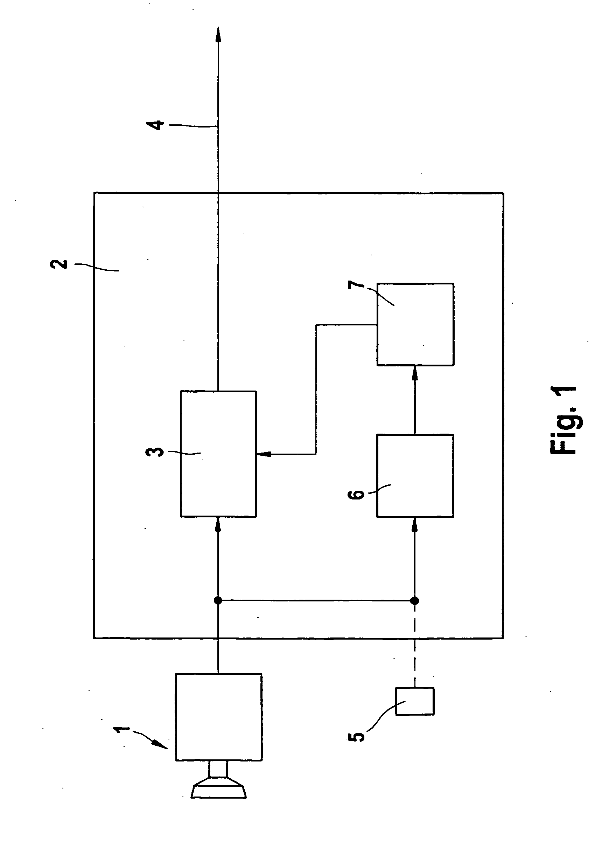

Figur 1 zeigt ein Übersichtsbild eines Bildsensorsystems, bei welchem mit 1 ein Bildsensor, insbesondere eine CCD- oder eine CMOS-Kamera, und mit 2 eine dazugehörige Steuereinheit bezeichnet ist. Das vom Bildsensor 1 aufgenommene Bild wird in einem Regler 3 der Steuereinheit 2 verarbeitet und in ein Bild mit möglichst hohem Kontrast umgesetzt, welches über den Ausgang 4 an nachfolgende Systeme zur Weiterverarbeitung und/oder zur Anzeige bzw. zur Speicherung abgegeben wird. Der Regler 3 umfasst wenigstens einen Regelparameter. Beispiele für solche Regelparameter sind die elektrische Verstärkung (Gain), der Offset (Ausblenden des Rauschanteils) oder die Integrationszeit (Belichtungszeit). Diese Regelparameter werden in herkömmlichen Bildsensorsystemen an die momentan gemessenen Belichtungsverhältnisse angepaßt. Je nach Ausführung werden die Belichtungsverhältnisse aus dem aktuell aufgenommenen Bild oder aus wenigstens einem separatem Belichtungssensor 5 abgeleitet. Gemäß der nachfolgend beschriebenen Vorgehensweise wird in einem Belichtungsmesser 6 die Beleuchtung der aufgenommenen Szene auf der Basis des Bildsensorsignals oder auf der Basis des Signals wenigstens eines separaten Belichtungssensors 5 ermittelt. In Abhängigkeit von dieser und von vorherigen Belichtungsmessungen wird mit Hilfe eines Modells 7 eine Anpassung wenigstens eines Regelparameters der Reglereinheit 3 vorgenommen, um das vom Bildsensor aufgenommene Signal optimal umzusetzen.

Das Modell 7 ermittelt dabei die zukünftig zu erwartenden Belichtungsverhältnisse, aus denen mindestens ein Regelparameter für einen zukünftigen Regelvorgang abgeleitet wird. Das Modell extrapoliert aus den momentanen und den vergangenen Belichtungsmessungen die zukünftigen Belichtungsverhältnisse, für die dann die passenden Reglerparameter berechnet werden. Auf diese Weise paßt die prädiktive Regelung ihre Dynamik an ihre Umwelt an, d.h. die Regelung folgt den Belichtungsveränderungen.

Das Modell enthält zusätzlich eine Schätzung von Streubreiten der Belichtungsmessungen, sowohl der aktuellen als auch der zukünftigen. Damit ermöglicht das Modell als auch die Detektion von sogenannten Ausreißern, wenn z.B. die gemessene Belichtung von der geschätzten Streubreite stark abweicht. In diese Fall werden die Belichtungsmessungen nicht zur Vorhersage der zukünftigen Belichtungsverhältnissen berücksichtigt.

Diese Maßnahme verhindert eine Destabilisierung der Regelung bei schnelleren Belichtungsveränderungen. Über die Ausreißerdetektion, d.h. kurzzeitige Belichtungsveränderungen, sendet die Kamera wichtige Informationen an nachgeschaltete Module, die sich dabei auf besondere Belichtungssituationen einstellen können. Beispielsweise verarbeiten sie das gelieferte Bild nicht weiter oder schalten sich vorübergehend ab.

Das Modell wird aus einer statistischen Analyse einer großen Zahl von Belichtungsmessungen oder aus einer theoretischen Modellierung des Systems mit Differenzialgleichungen gewonnen. Adaptive Ansätze mit einer Anpassung des Modells an die Meßwerte sind ebenfalls denkbar.

Die beschriebene Vorgehensweise ist nicht nur bei einzelnen Bildsensoren anwendbar, sondern auch im Rahmen sogenannter Stereokameras, wobei dort je nach Ausführungsbeispiel jede Kamera mit je einem entsprechenden Modul für sich oder beide Kameras mit einem einzigen Modell gemeinsam gesteuert werden.

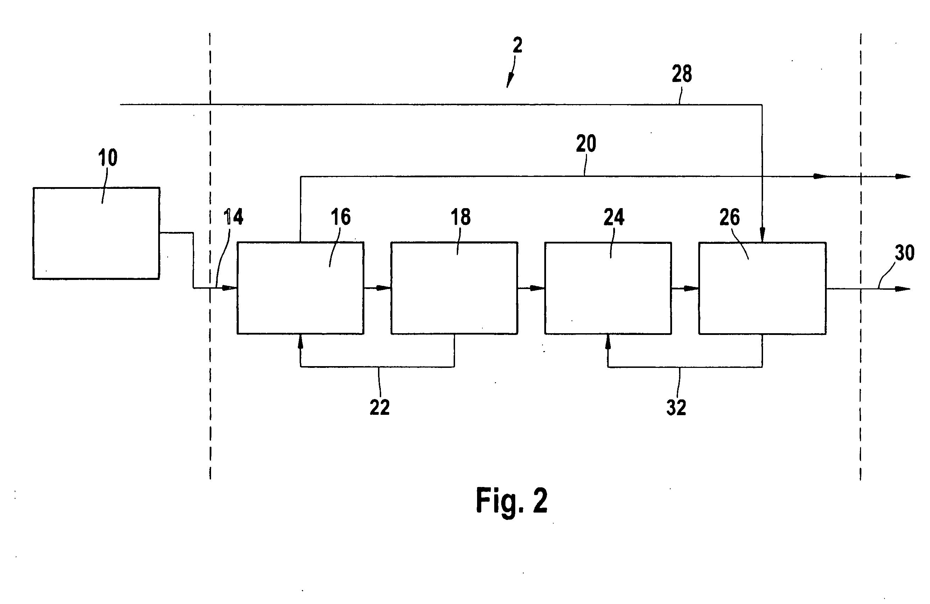

In Figur 2 ist ein Ablaufdiagramm dargestellt, welches eine konkrete Funktionsweise der Steuereinheit 2 beschreibt. Die einzelnen Blöcke stellen dabei Programm, Programmteile oder Programmschritte wenigstens eines Mikroprozessors dar, der die beschriebene Funktion ausführt. Die Verbindungslinien repräsentieren den Informationsfluß. Alle Verarbeitungsmodule sind in einem bevorzugten Ausführungsbeispiel in einem digitalen Prozessor implementiert. In anderen Ausführungen sind mehrere Prozessoren vorgesehen, auf die die einzelnen Signalverarbeitungsmodule verteilt sind. Je nach Ausführungsbeispiel erfolgt die Messung der momentanen Belichtungssituation entweder durch eine oder mehrere diskrete Meßeinheiten im Strahlengang der Kamera (z.B. Photodioden) oder auf der Basis des aktuellen Bildsignals des Sensors. Dieses Bildsignal wird von einer beliebigen Bildaufnahmeeinheit, z.B. einem CCD- oder CMOS-Imager mit linearer oder nichtlinearer Lichtempfindlichkeitskurve, erzeugt. Dabei werden in einem bevorzugten Ausführungsbeispiel nur Bildbereiche ausgewertet, die für die Regelung der Kamera relevant sind. Aufgenommen wird insbesondere die Häufigkeit der einzelnen Grauwerte, aus denen Kennwerte für die Belichtungssituation abgeleitet werden, z.B. der mittlere Grauwert oder die Perzentilpositionen des Histogramms. Die Auswahl der auszuwertenden Bildbereiche erfolgt nach Maßgabe des ermittelten Bildes, insbesondere werden die Stellen zur Auswertung herangezogen, die in einem bestimmten Bereich des Bildes liegen, oder die ein zu erkennendes Objekt umfassen, etc.

In der in Figur 2 dargestellten Ausführungsform ist eine Belichtungsmeßeinheit 10 vorgesehen, die ihre Belichtungsinformation über eine Datenleitung 14 der Steuereinheit 2 übermittelt. Die Belichtungsinformation wird dann in der Steuereinheit 2 dem Ausreißerdetektionsmodul 16 zugeführt. Dieses Modul zeigt insbesondere Vorteile im Fahrzeugeinsatz, bei dem Belichtungsmessungen vorkommen können, die sehr weit von den tatsächlichen Werten abweichen, beispielsweise durch Sättigungseffekte, Nicht-Gauss'sches Rauschen oder durch kurzzeitige Verdeckungen des Meßbereichs durch sich schnell bewegende Störobjekte, die bei der Kameraregelung nicht berücksichtigt werden sollten (z.B. ein Scheibenwischer vor der Kamera).

Zur Ausreißerdetektion wird dem Modul von einem Modell 18 eine Schätzung der zu erwartenden Belichtungsveränderungen geliefert, beispielsweise eine Schätzung für die Streuung der Belichtungsmessungen. Hinweise zur Ermittlung der Schätzwerte werden unten gegeben. Liegen die momentanen Meßwerte der Belichtung weit jenseits dieser Streuungsschätzwerte, werden sie vom Ausreißerdetektionsmodul als Ausreißer verworfen. Die entsprechenden Belichtungsmeßwerte werden dann dem nachfolgenden Modell 18 nicht übermittelt, so dass sie die Schätzung der zukünftigen Belichtungsverhältnisse nicht beeinflussen können. Gleichzeitig wird das Vorhandensein eines Ausreißers über ein Fehlersignal an nachfolgende Verarbeitungsmodule weitergemeldet. Dies erfolgt über die Datenleitung 20. Als Belichtungsmeßwert ist z.B. ein mittlerer Grauwert des Bildausschnitts vorgesehen.

Bei der Verwendung mehrerer Bildausschnitte wird z.B. dann zur Bildung des Belichtungsmesswerts über die mittleren Grauwerte der einzelnen Ausschnitte gemittelt. Weitere Möglichkeiten werden in einer parallelen Patentanmeldung desselben Anmwlders beschrieben.

Wird vom Ausreißerdetektionsmodul 16 kein Ausreißer erkannt, so wird der Belichtungsmeßwert an das Modell 18 übermittelt. Dieses enthält ein dynamisches Modell der Belichtungsverhältnisse. Das Modell dient dabei zwei Aufgaben, nämlich der Vorhersage der Belichtungsverhältnisse zum Zeitpunkt der Aufnahme des nächsten Bildes aus den momentanen und aus vergangenen Meßdaten, gegebenenfalls nach Bereinigung durch die Ausreißerdetektion, ferner der Schätzung des momentanen Streubereichs für die Belichtungsmessungen zum Zwecke der Ausreißerdetektion.

Um den Aufwand bei der Bildung des dynamischen Modells der Belichtungsmessungen zu reduzieren, werden statistische Modellierungstechniken angewendet. Dafür stehen bekannte Systemidentifikationsmethoden zur Verfügung, mit denen sich lineare Modelle aus einer größeren Anzahl von aufgezeichneten Belichtungsmessungen erzeugen lassen. Diese Art der Modellierung bedient sich im Wesentlichen der zeitlichen Korrelation zwischen den Belichtungszeitpunkten. Zeitliche Korrelationen sind auch im Fahrzeugeinsatz fast immer gegeben, selbst bei Tunneleinfahrten, da sich immer ein allmählicher Übergang in den Belichtungsmessungen zeigt, der sich über mehrere Bilder hinzieht. Sind die verwendeten Belichtungsmessungen zeitlich miteinander korreliert, lassen sich diese Korrelationen im Rahmen eines linearen Modells sowohl zur Vorhersage zukünftiger Werte als auch zur Schätzung der zugehörigen Streubereiche benutzen. Derartige statistische Methoden zur Systemidentifikation oder aber auch Online-Schätzungen der Modellparameter sind bekannt (eine Übersicht gibt z.B. S. Haykin, Adaptive Filter Theory, Prentice Hall, 1996).

Die vom Modell 18 gelieferten Streubereichschätzungen werden über die Leitung 22 dem Ausreißerdetektionsmodul zugeführt, die zukünftig zu erwartenden Belichtungsmeßwerte dem Regelparameterberechnungsmodul 24. Im Regelparameterberechnungsmodul werden aus der vorhergesagten Belichtungsmessung die Regelparameter, beispielsweise Gain, Offset, Integrationszeit, etc. bestimmt und der nachfolgenden BelichtungsRegelung 26 der Kamera übermittelt. Diese verarbeitet das über 28 zugeführte Bild nach Maßgabe der berechneten Regelparameter und gibt das ermittelte Bild über Datenleitung 30 an nachfolgende Verarbeitungseinheiten, zur Anzeige und/oder zur Speicherung weiter. In einem Anwendungsbeispiel werden die neuen Regelparameter aus den geschätzten Belichtungsmesswerten und den bisherigen Regelparametern, die von der BelichtungsRegelung über die Datenleitung 32 zugeführt werden, bestimmt. Dabei wird mindestens einen Regelparameter so vorbestimmt, dass die vorhergesagte mittlere Belichtung auf die Mitte des verfügbaren Grauwertebereichs abgebildet wird. Dies erfolgt beispielsweise mittels einer vorgegebenen Kennlinie, in der der Gain-Wert über einem mittleren Belichtungswert aufgetragen ist. Entsprechend wird bezüglich anderer Regelparameter, beispielsweise Offset oder Integrationszeit, verfahren.

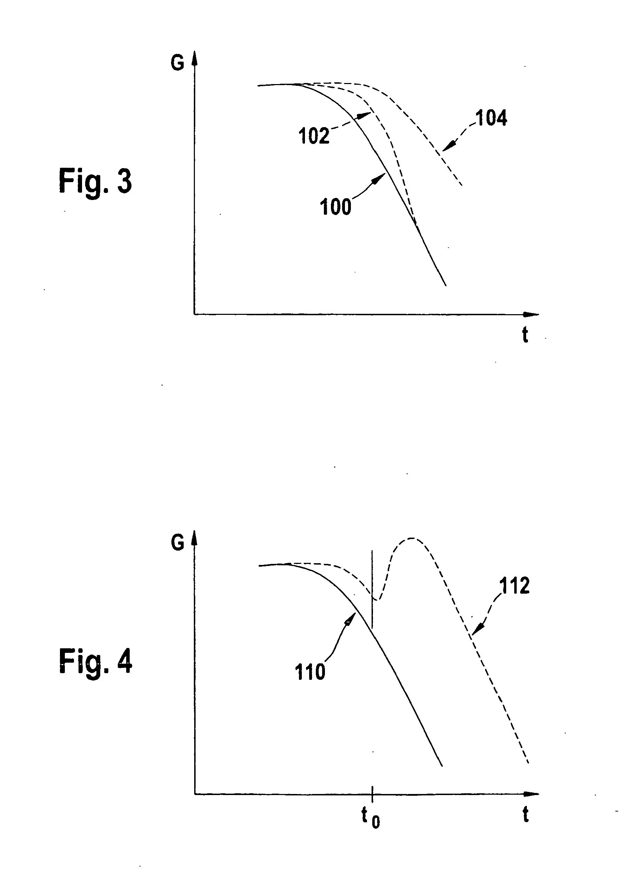

Die Diagramme der Figuren 3 und 4 zeigen die Wirkungsweise der oben dargestellten prädiktiven Regelung und/oder der Ausreißerdetektion. In Figur 3 ist dabei die Wirkungsweise der prädiktiven Regelung der nichtprädiktiven Regelung gegenübergestellt, wobei jeweils ein Grauwerteverlauf über der Zeit aufgetragen ist. Die durchgezogene Linie 100 zeigt den vorgegebenen Grauwerteverlauf in eingeschwungenem Zustand. Dieser vorgegebene Grauwerteverlauf zeigt die Veränderung eines Grauwertes an einer bestimmten Bildposition bei schnell wechselnden Bildern. Es zeigt sich, dass der Grauwerteverlauf 102 einer prädiktiven Regelung nach einer bestimmten Einschwingzeit der vorgegebenen Grauwertkurve folgt, während die nichtprädiktive, herkömmliche Regelung 104 einen Grauwerteverlauf zeigt, der dem vorgegebenen nachhinkt. Prädiktive Regelungen zeichnen sich also dadurch aus, dass mit Hilfe ihres dynamischen Modells Tendenzen in den bisherigen Regelparametern auf den Aufnahmezeitpunkt des nächsten Bildes extrapoliert werden. Wird also beispielsweise der Kamera eine Folge von homogenen Bildern präsentiert, deren Helligkeit nach einer bestimmten Kurve (z.B. linear oder polynomiell) sich verändert und wird gleichzeitig der von der zu testenden Regelung erzeugte durchschnittliche Grauwert der aufgenommenen Bilder aufgezeichnet, zeigen sich die Vorteile der prädiktiven Regelung. Ist ein ausreichend großer Zeitraum zwischen den Beleuchtungsveränderungen bzw. den Aufzeichnungszeitpunkten, so dass sich die Regelung vollständig auf die Beleuchtungsverhältnisse einschwingen kann, treffen sich bei einer prädiktiven Regelung beide Kurven nach einer gewissen Einschwingzeit. Bei einer nichtprädiktiven Regelung laufen die beiden aufgenommenen Grauwertkurven auseinander, bestenfalls parallel.

In Figur 4 ist eine vergleichbar Situation zur Darstellung der Ausreißerdetektion dargestellt. Auch hier ist der Grauwertverlauf über der Zeit aufgetragen. Dabei tritt zum Zeitpunkt T0 ein Ausreißer, d.h. eine plötzliche Veränderung der Belichtungsverhältnisse auf. Der Grauwerteverlauf der Regelung mit Ausreißerdetektion ist mit 110 und der durchgezogenen Linie bezeichnet, der Grauwerteverlauf der Regelung ohne Ausreißerdetektion mit 112. Wird also im eingeschwungenen Zustand dem Bildsensorsystem ein Ausreißerbild mit einer stark abweichenden Helligkeitsverteilung präsentiert, danach die ursprüngliche Beleuchtungskurve fortgesetzt, so wird bei Vorhandensein der Ausreißerdetektion das Bild von der Regelung verworfen, so dass der tatsächliche Verlauf des Grauwertes nicht beeinträchtigt wird. Fehlt eine Ausreißerdetektion, wird die Belichtungskurve nach dem Ausreißer stark beeinträchtigt.

Die vorstehend beschriebene Vorgehensweise zeigt die genannten Vorteile insbesondere beim Einsatz eines Kamerasystems in einem Kraftfahrzeug, sowohl bei einer Einzel- als auch bei einer Stereokamera. Aber auch in anderen Anwendungsfällen, in denen stark wechselnde Belichtungsverhältnisse vorkommen, wird die dargestellte Vorgehensweise mit den genannten Vorteilen eingesetzt.

## Patentansprüche

1. Verfahren zur Regelung eines Bildsensors (1), wobei mittels wenigstens eines Regelparameters die von dem Bildsensor (1) aufgenommene Szene in ein Bild umgesetzt wird, wobei die Regelparameter in Abhängigkeit der Belichtungsverhältnisse verändert werden, wobei zu erwartende Belichtungsverhältnisse für die bevorstehende Aufnahme eines Bildes ermittelt werden, wobei die Regelparameter abhängig von den zukünftig zu erwartenden Belichtungsverhältnissen angepaßt werden,
**dadurch gekennzeichnet, dass** bei einer Abweichung zwischen den tatsächlichen Belichtungsverhältnissen und den für dieses Bild erwarteten ein dieses Verhalten anzeigendes Signal eines Ausreißers erzeugt wird, wobei bei Erkennen eines solchen Ausreißers das Bild bei der Bestimmung der Regelparameter nicht berücksichtigt wird.

2. Verfahren nach Anspruch 1, **dadurch gekennzeichnet, dass** mittels eines Modells (7) aus momentanen und vergangenen Belichtungsmessungen die zukünftig zu erwartenden Belichtungsverhältnisse ermittelt werden.

3. Verfahren nach Anspruch 2, **dadurch gekennzeichnet, dass** das Modell (7) aufgrund einer statistischen Auswertung aufeinanderfolgender Bilder im Rahmen einer Systemidentifikation ermittelt wird.

4. Verfahren nach einem der vorhergehenden Ansprüche, **dadurch gekennzeichnet, dass** die Belichtungsmessungen abhängig vom Signal zusätzlicher Belichtungssensoren (5) oder aus dem vom Bildsensor (1) aufgenommenen Bild abgeleitet werden.

5. Verfahren nach Anspruch 1, **dadurch gekennzeichnet, dass** die Streubreite der Belichtungsmesswerte zur Ermittlung der zu erwartenden Belichtungsverhältnisse herangezogen wird.

6. Verfahren nach einem der vorhergehenden Ansprüche, **dadurch gekennzeichnet, dass** die Regelparameter in Abhängigkeit der zukünftig zu erwartenden Belichtung so festgelegt werden, wobei eine mittlere Belichtung auf die Mitte des verfügbaren Grauwertebereichs abgebildet wird oder die Perzentile der Grauwertverteilung auf festgelegte Sollwerte eingestellt werden.

7. Vorrichtung zur Regelung eines Bildsensors (1), welcher eine Szene aufnimmt, mit einer Steuereinheit (2), welche aus der aufgenommenen Szene ein Bild erzeugt, wobei wenigstens ein Regelparameter abhängig von den Belichtungsverhältnissen angepaßt wird, wobei die Steuereinheit (2) Mittel umfaßt, welche eine zukünftig zu erwartende Belichtung abschätzt und die Regelparameter abhängig von der abgeschätzten Belichtung anpasst,
**dadurch gekennzeichnet, dass** die Steuereinheit (2) Mittel umfasst, welche bei einer Abweichung zwischen den tatsächlichen Belichtungsverhältnissen und den für dieses Bild erwarteten ein dieses Verhalten anzeigendes Signal eines Ausreißers erzeugen, wobei bei Erkennen eines solchen Ausreißers das Bild bei der Bestimmung der Regelparameter nicht berücksichtigt wird.

## Claims

1. Method for controlling an image sensor (1), wherein the scene recorded by the image sensor (1) is converted into an image by means of at least one control parameter, wherein the control parameters are altered in a manner dependent on the exposure conditions, wherein exposure conditions to be expected are determined for the imminent recording of an image, wherein the control parameters are adapted depending on the exposure conditions to be expected in the future,
**characterized in that** in the event of a deviation between the actual exposure conditions and those expected for this image, a signal of an outlier that indicates this behaviour is generated, wherein, when such an outlier is identified, the image is not taken into account in determining the control parameters.

2. Method according to Claim 1, **characterized in that** the exposure conditions to be expected in the future are determined from instantaneous and past exposure measurements by means of a model (7).

3. Method according to Claim 2, **characterized in that** the model (7) is determined on the basis of a statistical evaluation of successive images in the context of a system identification.

4. Method according to any of the preceding claims, **characterized in that** the exposure measurements are derived depending on the signal of additional exposure sensors (5) or from the image recorded by the image sensor (1).

5. Method according to Claim 1, **characterized in that** the variation range of the exposure measurement values is used for determining the exposure conditions to be expected.

6. Method according to any of the preceding claims, **characterized in that** the control parameters are defined in a manner dependent on the exposure to be expected in the future, wherein an average exposure is mapped onto the middle of the available grey-scale value range or the percentiles of the grey-scale value distribution are set to defined desired values.

7. Device for controlling an image sensor (1) that records a scene, comprising a control unit (2), which generates an image from the recorded scene, wherein at least one control parameter is adapted depending on the exposure conditions, wherein the control unit (2) comprises means which estimates an exposure to be expected in the future and adapts the control parameters depending on the estimated exposure, **characterized in that** the control unit (2) comprises means which, in the event of a deviation between the actual exposure conditions and those expected for this image, generate a signal of an outlier that indicates this behaviour, wherein, when such an outlier is identified, the image is not taken into account in determining the control parameters.

## Revendications

1. Procédé de réglage d'un capteur d'image (1) selon lequel, à l'aide d'au moins un paramètre de réglage on convertit la scène prise par le capteur d'image (1) en une image,
les paramètres de réglage étant modifiés en fonction des conditions d'éclairage,
on détermine les conditions d'éclairage prévues pour la prise d'image à effectuer,
les paramètres de réglage étant adaptés en fonction des conditions d'éclairage futures, prévisibles,
**caractérisé en ce qu'**
en cas d'écart entre les conditions d'éclairage effectives et celles prévues pour cette image, on génère une valeur aberrante traduisant ce comportement du signal, et
lors de la détection de cette valeur aberrante, l'image n'est pas prise en compte pour déterminer les paramètres de réglage.

2. Procédé selon la revendication 1,
**caractérisé en ce qu'**
à partir des mesures d'éclairage instantanées et passées, à l'aide d'un modèle (7) on détermine les conditions d'éclairage futures à prévoir.

3. Procédé selon la revendication 2,
**caractérisé en ce que**
sur le fondement d'une exploitation statistique on détermine les images successives dans le cadre d'une identification systématique.

4. Procédé selon l'une des revendications précédentes,
**caractérisé en ce qu'**
on déduit les mesures d'éclairage en fonction du signal de capteur d'éclairage (5) supplémentaire ou à partir de l'image prise par le capteur d'image (1).

5. Procédé selon la revendication 1,
**caractérisé en ce qu'**
on utilise les valeurs de mesure d'éclairage pour déterminer les conditions d'éclairage à prévoir.

6. Procédé selon l'une des revendications précédentes,
**caractérisé en ce qu'**
on fixe les paramètres de réglage en fonction de l'éclairage futur à prévoir, et
on règle en fonction d'un éclairage moyen, au milieu de la plage des niveaux de gris disponibles ou on règle les pourcentages de la répartition des valeurs de gris sur des valeurs de consigne fixées.

7. Dispositif de réglage d'un capteur d'image (1) pour prendre une scène comportant une unité de commande (2) qui génère une image à partir de la scène captée,
au moins un paramètre de réglage étant adapté en fonction des conditions d'éclairage,
l'unité de commande (2) comprenant des moyens évaluant un éclairage futur prévisible et adaptant les paramètres de réglage en fonction de l'éclairage évalué,
**caractérisé en ce que**
l'unité de commande (2) comprend des moyens qui, en cas d'écart entre les conditions d'éclairage effectives et celles prévisibles pour cette image, génèrent une aberration indiquant ce comportent du signal et en cas de détection de cette aberration, l'image n'est pas prise en compte pour déterminer les paramètres de réglage.
